**Europäisches Patentamt**

**European Patent Office**

**Office européen des brevets**

(11) Veröffentlichungsnummer: **0 216 092**
**A1**

## (12) EUROPÄISCHE PATENTANMELDUNG

(21) Anmeldenummer: **86110776.1**

(22) Anmeldetag: **04.08.86**

(51) Int. Cl.⁴: **B60T 8/18**

(30) Priorität: **29.08.85 DE 3530887**

(43) Veröffentlichungstag der Anmeldung:
**01.04.87 Patentblatt 87/14**

(84) Benannte Vertragsstaaten:
**BE DE FR GB IT NL SE**

(71) Anmelder: **KNORR-BREMSE AG**
**Moosacher Strasse 80 Postfach 401060**
**D-8000 München 40(DE)**

(72) Erfinder: **Emmert, Johannes**
**Kirschenstrasse 8**
**D-8028 Taufkirchen(DE)**

(54) **Lastabhängiger Bremskraftregler für Bremsanlagen in mit Luftfederung oder hydraulischem Achsausgleich versehenen Fahrzeugen.**

㊼ Bei einem lastabhängigen Bremskraftregler für Bremsanlagen in mit Luftfederung oder hydraulischem Achsausgleich versehenen Fahrzeugen ist ein Stellglied in Form eines Stößels (3) vorgesehen, welcher die Regelgröße des Bremskraftregels zwischen Leerlast und Vollast bestimmt und dessen Position von einem Steuerkolben (13) bestimmt ist. Der mit einem Druckstück (49) am Stößel (3) anliegende Steuerkolben (13) ist in axialer Erstreckung des Stößels in einem Stufenkolben (9) geführt, wobei der Stufenkolben seinerseits in einem mit dem Bremskraftregler verbundenen Gehäuse (7) verschiebbar geführt ist. Der Stufenkolben ist durch den lastabhängigen Steuerdruck der Luftfederbälge bzw. des hydraulischen Achsausgleiches entgegen der Kraft einer Feder (33) in eine Anschlagposition bewegbar, wenn der Steuerdruck größer ist als der Ausfalldruck des Reglers; durch die Kraft der Feder (33) ist der Stufenkolben (9) in eine zweite Anschlagposition bewegbar, wenn der Steuerdruck kleiner ist als der Ausfalldruck des Reglers. In der zweiten Anschlagposition befindet sich der vom Stufenkolben getragene Steuerkolben (13) in einer Zwischenlaststellung für den Stößel (3). Die Anschlagpositionen des Stufenkolbens werden von einem am Gehäuse (7) positionsveränderlich geführten Anschlag festgelegt. Der Steuerkolben seinerseits besitzt eine durch eine Schraube (55) als Anschlagelement festgelegte Endlage, welche unterhalb des Leerlastdruckes, d.h. bei weiterer Verringerung des Fahrzeuggewichtes, verhindert, daß der Steuerkolben durch seine Regelfeder (11) in eine Position übersteuert wird, in welcher die Funktion des Bremskraftreglers ausfällt.

Xerox Copy Centre

# Lastabhängiger Bremskraftregler für Bremsanlagen in mit Luftfederung oder hydraulischem Achsausgleich versehenen Fahrzeugen

Die Erfindung betrifft einen lastabhängigen Bremskraftregler nach dem Gattungsbegriff des Patentanspruches 1.

Bremskraftregler mit automatisch-lastabhängiger Beeinflussung der gattungsgemäßen Art weisen für die Steuerung des Stellgliedes eine Steuereinrichtung auf, bei welcher unter rechtem Winkel zur Längsachse des Bremskraftreglers und des Stellglieds sich erstreckend ein Steuerkolben vorgesehen ist, welcher vom lastabhängigen Steuerdruck der Luftfederbälge bzw. des hydraulischen Achsausgleichs entgegen der Kraft einer Regelfeder beaufschlagt ist und eine Steuerkurve trägt. Auf der Steuerkurve gleitet das aus dem Bremskraftregler sich erstreckende Ende des Stellglieds, so daß durch Längsbewegungen des Steuerkolbens Höhenbewegungen des Stellglieds entsprechend der Kontur der Steuerkurve ausgelöst werden.

Die horizontalen baulichen Abmessungen derartiger Steuereinrichtungen sind beträchtlich, der Einbau von Bremskraftreglern der gattungsgemäßen Art kann in baulich beengten Verhältnissen infolgedessen unmöglich werden. Auch ist die Feinabstimmung derartiger Bremskraftregler unter Umständen problematisch, da die vom Steuerkolben getragene Steuerkurve hinsichtlich ihrer Konturierung festgelegt ist, sowohl hinsichtlich Steilheit als auch hinsichtlich baulicher Länge.

Davon ausgehend besteht die Aufgabe der Erfindung darin, einen Bremskraftregler der in Rede stehenden Art so auszugestalten, daß die zur Lagebeeinflussung des Stellglieds dienende, pneumatisch oder hydraulisch gegen Federkraft wirkende Steuereinrichtung möglichst platzsparend angeordnet ist. Es soll im besonderen verhindert werden, daß der Bremskraftregler horizontal zu groß baut. Trotzdem soll es möglich sein, die zur Lagebeeinflussung des Stellglieds dienenden Mittel bei kompakter und raumsparender Anordnung so exakt einzustellen, daß den bestehenden Erfordernissen in jedem fall Genüge getan ist. Es soll auch insbesondere möglich sein, eine Nachstellung des Bremskraftreglers vorzunehmen, ohne daß hierfür in ihrer Charakteristik feststehende Kurvenelemente benutzt werden.

Zur Lösung dieser Aufgabe dienen die Merkmale nach dem Kennzeichnungsteil des Patentanspruches 1.

Der Steuerkolben des Bremskraftreglers besitzt in baulich gedrängter Form ein ihn umgebendes Kolbensystem, welches, wie der Steuerkolben, in axialer Erstreckung des Stößels bzw. Stellglieds des Bremskraftreglers angeordnet ist, so daß in horizontaler Richtung Raum eingespart ist. Da sich der Steuerkolben innerhalb des ihn tragenden Stufenkolbens befindet, ist auch in axialer Richtung Platz gespart. Es ist gleichzeitig durch die Anschläge für den Stufenkolben und für den Steuerkolben sichergestellt, daß die erforderliche Feineinstellung des Bremskraftreglers herbeigeführt werden kann. Auch die Durchsteuerung in die Notbremsstellung entsprechend einer Zwischenlaststellung ist absolut sicher gewährleistet, da die hierfür erforderliche Feder stark dimensioniert werden kann. Ein Übersteuern des Stellgliedes bei weiterer Verringerung des Fahrzeuggewichtes, so durch Entfernen des Aufbaues des Fahrzeugs, kann absolut sicher verhindert werden, da der dem Steuerkolben zugeordnete Anschlag die Leerlastposition als Endposition fixiert.

Vorteilhafte Ausgestaltungen und Weiterbildungen sind in weiteren Patentansprüchen aufgeführt.

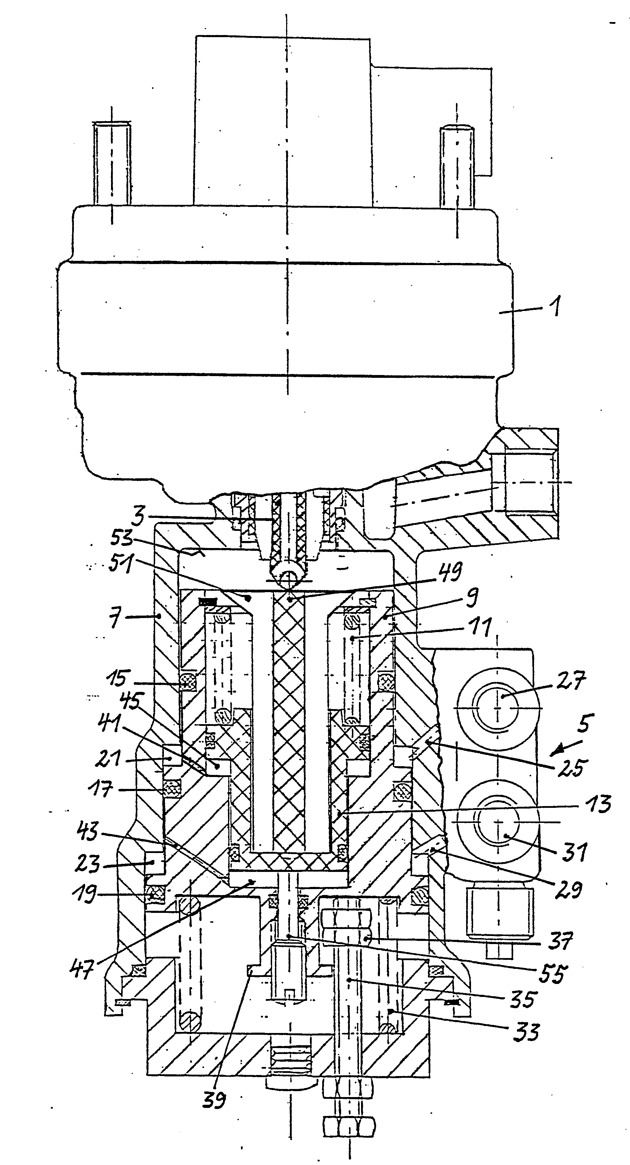

Die Erfindung ist nachfolgend anhand eines Ausführungsbeispiels unter Bezugnahme auf die beigefügte Zeichnung erläutert. Die Zeichnung zeigt in Teilschnittansicht einen lastabhängigen Bremskraftregler mit der in Längsschnittansicht wiedergegebenen Steuereinrichtung nach der Erfindung.

Der in der Zeichnung dargestellte Bremskraftregler 1 weist einen Stößel 3 auf, welcher durch eine an der Unterseite des Bremskraftreglers befindliche Steuereinrichtung 5 von nachfolgend beschriebener Konstruktion beaufschlagbar ist, um eine automatisch-lastabhängige Beeinflussung der vom Bremskraftregler ausgesteuerten Bremsluft zu erzielen.

Die Steuereinrichtung 5 ist einem Gehäuse 7 angeordnet, welches an der Unterseite des Bremskraftreglers angeflanscht oder mit dem Bremskraftreglergehäuse verbunden sein kann. Im Inneren des Gehäuses 7 befindet sich ein Stufenkolben 9, welcher eine die Funktion der Steuereinrichtung bestimmende Regelfeder 11 und einen Steuerkolben 13 beinhaltet. Der Stufenkolben 9 weist an seinem Außenumfang gegenüber der Innenwand des Gehäuses 7 geführte Dichtringe 15,17 und 19 auf; zwischen dem in der Zeichnung oberen Dichtring 15 und dem mittleren Dichtring 17 des Stufenkolbens 9 besteht ein Ringraum 21, während zwischen dem mittleren Dichtring 17 und dem in der Zeichnung unteren Dichtring 19 ein weiterer Ringraum 23 vorgesehen ist. Der Ringraum 21 steht mittels einer Leitung 25 mit einem Steueranschluß 27 in Verbindung, während der Ringraum 23 mittels einer Leitung 29 an einen Steueranschluß 31 angeschlossen ist. Die beiden Steueranschlüsse 27 und 31 werden pneumatisch mit dem lastabhängigen Druck von Federungskörpern des Fahrzeuges oder hydraulisch vom Achsausgleich des Fahrzeuges beaufschlagt. Der in den Ringraum 21 und in den Ringraum 23 gelangende Steuerdruck der beiden Steueranschlüsse 27 und 31 bewirkt, daß der Stufenkolben gemäß Darstellung gegen die Kraft einer Feder 33 nach unten gerichtet verschoben wird und an einem einstellbaren Anschlag 35 zur Anlage kommt. Diese Position ist in der Zeichnung wiedergegeben. Der Anschlag 7 ist im dargestellten Ausführungsbeispiel durch einen Schraubbolzen gebildet, welcher höhenverstellbar im Gehäuse 7 eingeschraubt ist und an seinem gemäß Darstellung oberen Ende mit der Unterseite des Stufenkolbens 9 zur Anlage gelangt, wenn in den beiden Ringräumen 21 und 23 ein Druck besteht, welcher zumindest oberhalb eines sog. Ausfalldruckes liegt. Am oberen Ende des Schraubbolzens befindliche Muttern 37 dienen andererseits als Anschlagelemente für einen am unteren Ende des Stufenkolbens 9 befindlichen, radial auskragenden Bund 39, welcher die gemäß Darstellung nach oben gerichtete Verschiebung des Stufenkolbens unter Einwirkung der Feder 33 zu begrenzen vermag, wenn der Druck innerhalb der Ringräume 21 und 23 unterhalb des Ausfalldruckes absinkt.

Von den Ringräumen 21 und 23 führen Kanäle 41 und 43 in Steuerkammern 45 und 47, so daß der Druck der Steueranschlüsse 27 und 31 gleichfalls in diesen Steuerkammern zur Wirkung kommt und in an sich bekannter Weise auf den Steuerkolben einwirkt. Der vom Stufenkolben 9 getragene Steuerkolben 13 wird bei Druckbeaufschlagung der Steuerkammern 45 und 47 gegen die Kraft der Regelfeder 11 zwischen Leerlast- und Vollaststellung verschoben und wirkt hierbei über ein Druckstück 49 auf das untere Ende des Stößels 3 des Bremskraftreglers ein. Das Druckstück 49 ist im dargestellten Ausführungsbeispiel in den Steuerkolben 13 eingesetzt und vermag mittels seitlich auskragender Schultern 51 mit der Unterseite 53 des Bremskraftreglers in Anlage zu gelangen, wenn der Steuerdruck in den Steuerkammern einen vorbestimmten Maximalwert erreicht. Durch diese Anlage ist sichergestellt, daß sich der Stößel 3 nicht weiter nach oben gerichtet zu verschieben vermag.

Die Wirkungsweise der pneumatisch oder hydraulisch beaufschlagbaren Steuereinrichtung gemäß der Erfindung ist wie folgt:

Wenn in den Luftfederelementen, so zum Beispiel den Luftfederbälgen des Fahrzeuges bzw. im hydraulischen Achsausgleich, ein Druck existiert, welcher zwischen dem Wert Null und dem sog. Ausfalldruck liegt, überwiegt die Kraft der Feder 33 die Druckkraft in den Ringräumen 21 und 23, so daß der den Steuerkolben tragende Stufenkolben 9 gemäß Darstellung nach oben gerichtet verschoben wird und eine Lage einnimmt, in welcher sich der Bund 39 in Anschlagposition an der unteren der Muttern 37 des Anschlages 35 befindet. Übersteigt der in den Ringräumen existierende Druck den Ausfalldruck, dann wird der Stufenkolben in die in der Zeichnung dargestellte Anschlagposition verschoben. Der Ausfalldruck ist kleiner als der sog. Leerlastdruck, welcher die in der Zeichnung dargestellte unterste Position des Stößels 3 festlegt. In dieser Lage liegt der Steuerkolben gemäß Darstellung am oberen Ende einer Schraube 55 an, welche an der Unterseite des Stufenkolbens eingeschraubt ist und sich in die Steuerkammer 47 erstreckt. Die Schraube 55 legt demnach die unterste Laststellung (leer) fest. Die Fixierung dieser untersten Laststellung ist notwendig, da bei einer weiteren Verringerung des Fahrzeuggewichtes (Entfernung des Aufbaues, Ausfedern durch Bodenwellen) der Stößel 3 unter die Leerbremsstellung gelangen könnte und der Bremskraftregler hierbei nicht mehr einbremst. Bei einem Entweichen der Balgdrücke stößt zunächst der Steuerkolben in der Leerbremsstellung auf der Schraube 55 auf, wie vorstehend beschrieben wurde. Sinkt der Druck in den Federbälgen o.dgl. Federkörpern weiter ab, dann unterschreitet bei Erreichen des Ausfalldruckes die gegen den Anschlag 35 gerichtete Kraft des Stufenkolbens 9 die Kraft der Feder 33, derart, daß die Feder den Stufenkolben in die Anschlagposition des Bunds 39 an der unteren der Muttern 37 schiebt. Die Position der Muttern 37 wird im allgemeinen so gewählt, daß die Anschlagposition des Stufenkolbens der Halblaststellung im Regler entspricht. Sie kann natürlich auch so gewählt werden, daß z.B. eine Dreiviertel-Laststellung im Regler erreicht wird. Die Höhenverstellung des Anschlages 35 durch Verschrauben im Gehäuse der Steuereinrichtung, also die Festlegung der untersten Anschlaghöhe des Stufenkolbens, erweist sich bei der Einstellung des Bremskraftreglers als erforderlich, da durch das axiale Verschieben des Stufenkolbens ein vorherbestimmbarer Punkt der Leer-Last-Kennlinie erzielbar ist. Die restliche Kennlinie des Reglers ergibt sich durch die Federkonstante der Regelfeder.

Bezugszeichenliste

1 Bremskraftregler
3 Stößel
5 Steuereinrichtung
7 Gehäuse
9 Stufenkolben
11 Feder
13 Steuerkolben

15 Dichtring
17 Dichtring
19 Dichtring
21 Ringraum
23 Ringraum
25 Leitung
27 Steueranschluß
29 Leitung
31 Steueranschluß
33 Feder
35 Anschlag
37 Mutter
39 Bund
41 Kanal
43 Kanal
45 Steuerkammer
47 Steuerkammer
49 Druckstück
51 Schulter
53 Unterseite
55 Schraube

## Ansprüche

1. Lastabhängiger Bremskraftregler für Bremsanlagen in mit Luftfederung oder hydraulischem Achsausgleich versehenen Fahrzeugen, mit einem Stellglied, welches die Regelgröße des Bremskraftreglers zwischen Leerlast und Vollast bestimmt, und mit einem Steuerkolben, welcher vom lastabhängigen Steuerdruck der Luftfederbälge bzw. des hydraulischen Achsausgleiches entgegen der Wirkung einer vorgespannten Regelfeder beaufschlagbar ist, wobei die Vorspannung der Regelfeder mittels einer Schraube einstellbar ist, dadurch gekennzeichnet, daß sich der Steuerkolben (13) in axialer Verlängerung des Stellglieds (Stößel 3) des Bremskraftreglers erstreckt und von einem Kolbensystem getragen ist, welches unterhalb des Leerlastdruckes unter mechanischer Einwirkung in eine den Steuerkolben in eine Zwischenlaststellung verschiebende Position einstellbar ist.

2. Lastabhängiger Bremskraftregler nach Anspruch 1, dadurch gekennzeichnet, daß das Kolbensystem einen in einem Gehäuse (7) geführten Stufenkolben (9) aufweist, welcher oberhalb des Ausfalldruckes des Bremskraftreglers durch den lastabhängigen Steuerdruck der Luftfederbälge bzw. des hydraulischen Achsausgleiches entgegen der Kraft einer Feder (33) in eine erste Anschlagposition verschiebbar ist, in welcher der von ihm getragene Steuerkolben entgegen der Kraft der Regelfeder zwischen Leerlaststellung und Vollaststellung bewegbar ist, und daß der Stufenkolben - (9) unterhalb des Ausfalldruckes durch die Feder - (33) in eine zweite Anschlagposition verschiebbar ist, in welcher sich der von ihm getragene Steuerkolben (13) in einer Zwischenstellung befindet.

3. Lastabhängiger Bremskraftregler nach Anspruch 1 oder 2, dadurch gekennzeichnet, daß der Stufenkolben (9) sowohl in der ersten Anschlagposition als auch in der zweiten Anschlagposition an einem vom Gehäuse (7) positionsveränderlich geführten Anschlag (35) anliegt.

4. Lastabhängiger Bremskraftregler nach einem der vorangehenden Ansprüche, dadurch gekennzeichnet, daß der Stufenkolben (9) an der dem Stößel (3) zugewandten Stirnseite eine Öffnung aufweist, in welcher der Steuerkolben (13) eingesetzt ist, wobei sich die Regelfeder (11) unter Vorspannung zwischen dem Stufenkolben und dem Steuerkolben abstützt, daß der Steuerkolben mit dem ihn umgebenden Stufenkolben Steuerkammern (45,47) bildet, welche durch den lastabhängigen Steuerdruck der Luftfederbälge bzw. des hydraulischen Achsausgleichs beaufschlagbar sind, derart, daß der Steuerkolben durch den Steuerdruck in Richtung des Stößels (3) und durch die Regelfeder (11) entgegengesetzt gerichtet verschiebbar ist, und daß sich der Steuerkolben (13) an seinem bezüglich des Stößels entgegengesetzten Ende an einem positionsveränderlich am Stufenkolben geführten Anschlag (Schraube 55) abzustützen vermag, derart, daß die Leerlaststellung des Steuerkolbens bei weiterer Verringerung des Fahrzeuggewichtes nicht übersteuerbar ist.

5. Lastabhängiger Bremskraftregler nach einem der vorangehenden Ansprüche, dadurch gekennzeichnet, daß die Steuerkammern (45,47) mittels den Stufenkolben (9) radial gerichtet durchsetzender Kanäle (41,43) mit Ringräumen (21,23) in Verbindung stehen, welche zwischen dem Stufenkolben und dem den Stufenkolben aufnehmenden Gehäuse (7) gebildet sind, wobei der Stufenkolben durch den Steuerdruck in den Ringräumen (21,23) entgegen der Kraft der Feder (33) in seine erste Anschlagposition und durch die Kraft der Feder - (33) in seine zweite Anschlagposition verschiebbar ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 110 203 (KNORR)<br>* Seite 5, Zeilen 11-32; Figuren 1-4 * | 1 | B 60 T 8/18 |
| A | DE-A-2 739 362 (BOSCH)<br>* Seite 10; Figur 2 * | 1 | |
| A | EP-A-0 058 413 (WABCO) | | |
| A | DE-A-3 032 802 (WABCO) | | |
| E | EP-A-0 198 200 (BOSCH)<br>* Insgesamt * | 1,2 | |

**RECHERCHIERTE SACHGEBIETE (Int. Cl.4)**

B 60 T

Der vorliegende Recherchenbericht wurde für alle Patentansprüche erstellt.

| Recherchenort | Abschlußdatum der Recherche | Prüfer |
|---|---|---|
| DEN HAAG | 04-12-1986 | BLURTON M.D |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82